# EUROPEAN PATENT SPECIFICATION

(11) **EP 3 248 867 B1**
(45) Date of publication and mention of the grant of the patent: **11.09.2019**
(21) Application number: 16305594.0
(22) Date of filing: 23.05.2016
(51) Int. Cl.: B64C 11/20, B64C 11/26, B64D 15/12, B64D 45/02

(54) **PROPELLER BLADE SHEATH**
PROPELLERBLATTHÜLLE
GAINE DE PALES D'HÉLICE

(43) Date of publication of application: 29.11.2017
(73) Proprietor: Ratier-Figeac SAS, 46100 Figeac Cedex (FR)
(72) Inventor: ANDRZEJEWSKI, Arnaud, 46100 LISSAC-ET-MOURET (FR); PICARD, Pierre-Alex, 46100 FIGEAC (FR); PRUNET, Ludovic, 46120 THEMINES (FR); VIGIER, Frédéric, 46100 LUNAN (FR); MOLES, Patrick, 46100 CORN (FR)
(74) Representative: Dehns

(56) References cited:
- EP-A1- 2 857 678
- EP-A2- 2 431 276
- GB-A- 2 218 473
- US-A- 5 306 120
- US-A1- 2015 147 183

## Description

### TECHNICAL FIELD

The present disclosure relates to propeller blades, more specifically towards an electrically conductive sheath for electrically grounding a propeller blade.

### BACKGROUND

Leading edges of propeller blades are typically protected against erosion by providing a bonded metal leading edge on a top half of the airfoil. The airfoil may be further protected against damage from lightning strikes by providing an apertured foil such as that disclosed in US 5352565. Such foils can be complex to manufacture and repair. A heater may also be bonded on the blade leading edge in areas where there is no metal leading edge, to protect the blade against icing effects. However, this heater is subjected to erosion and foreign object damage.

A propeller blade assembly having the features of the preamble of claim 1 is disclosed in GB2218473A.

### SUMMARY

From a first aspect, the invention provides a propeller blade assembly as set forth in claim 1.

The invention, in this aspect thus provides a metal structure along the entire leading edge of a propeller blade airfoil and allows grounding of the metal leading edge tip to the blade root. The long leading edge can conduct lightning current from the tip of the blade, or impact point, to the metallic root and hub. The sheath can also discharge static electricity from the propeller blade.

The electrically conductive sheath may extend over at least a portion of the airfoil tip. For example, the electrically conductive sheath may extend over the whole of the airfoil tip

In various embodiments, the outer surface of the sheath is flush with an external surface of the airfoil.

The electrical heaters may extend over a portion of the length of the leading edge adjacent the base of the airfoil. For example, they may extend over less than the whole of the length of the airfoil from the root such as less than 80% of the length of the airfoil from the root. In one particular embodiment, the electrical heaters extend over about 50% of the length of the airfoil from the root.

The sheath may completely cover the one or more electrical heaters.

From a further aspect, the invention also provides an electrically conductive sheath for electrically grounding a propeller blade, as set forth in claim 6.

The electrically conductive sheath may be made from a metallic material such as stainless steel, aluminium, nickel, titanium or an alloy containing one or more of the above. The electrically conductive sheath may also be made from an electrically conductive polymer or composite material. The electrically conductive sheath may also be made from a combination of any of the material listed above.

The electrically conductive sheath may be made as a single part or from multiple parts. When made from multiple parts, the parts may be made from the same materials or different materials, for example metal and polymer. In one example the electrically conductive sheath may be made from multiple parts made from different metals. In another example, the electrically conductive sheath may be made from multiple parts made from metal and at least one polymer or composite part. The multiple parts may be secured together by welding, adhesive bonding or fasteners, for example.

The electrically conductive sheath may comprise an ice-phobic surface on its outer surface and/or an anti-erosion top coat.

In various embodiments, the electrically conductive element may be attached at one end to the internal surface of the electrically conductive sheath and at its other end to the root. For example, the electrically conductive element may be attached to the electrically conductive sheath and/or root by welding or adhesive bonding, for example by a silver filled adhesive. Alternatively it may be attached to the electrically conductive sheath and/or root by means of a fastener.

The propeller blade assembly may form part of a propeller for an aircraft. The propeller may include a hub and a plurality of blade assemblies as set forth above. The root of each propeller blade assembly may be attached to the hub for rotation with the hub and further mounted for rotation about a blade axis such that the pitch of the airfoil relative to the hub can be adjusted.

The assembly may further comprise a cover that extends over a portion of the root and a portion of the base of the airfoil to protect a portion of the electrically conductive sheath and electrically conductive element. The cover may also protect a portion of a current source or wires to the one or more heaters. The cover may be thermoplastic, for example.

The invention also provides a method for assembling a propeller blade assembly as set forth in claim 13.

The method may further comprise attaching the one or more heaters to the leading edge of the airfoil prior to or at the same time as attaching the electrically conductive sheath to the leading edge of the airfoil.

Alternatively, the method may comprise attaching the one or more heaters to the electrically conductive sheath and attaching the electrically conductive sheath and the heaters to the airfoil leading edge together such that the heaters are positioned between the electrically conductive sheath and the airfoil.

### BRIEF DESCRIPITION OF THE DRAWINGS

An embodiment of the disclosure will now be described, by way of example only, with reference to the accompanying drawings in which:
Figure 1 shows a propeller blade assembly in accordance with the disclosure;
Figure 2 shows a detailed view of the root of the propeller blade of Figure 1;
Figure 3 shows the propeller blade of Figure 1 with a cover over the lower end of the propeller blade airfoil;
Figure 4 shows a detailed view of the root of the propeller blade of Figure 3;
Figure 5 shows an exploded view of a propeller blade assembly in accordance with this disclosure;

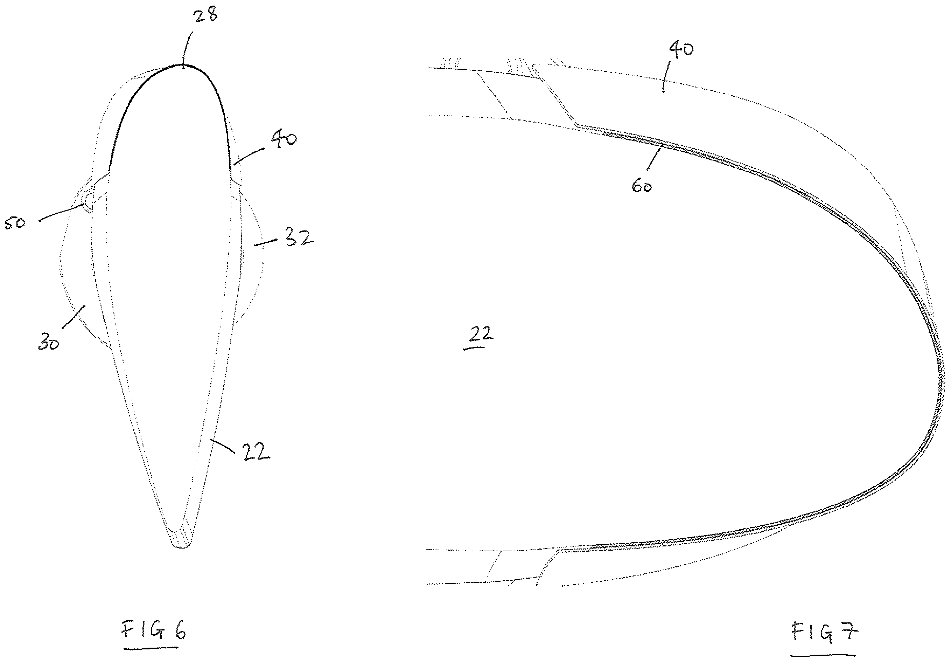

Figure 6 shows a cross sectional view of the propeller blade assembly of Figure 3; and
Figure 7 shows a detailed view of the leading edge of the propeller blade assembly of Figure 6.

### DETAILED DESCRIPTION

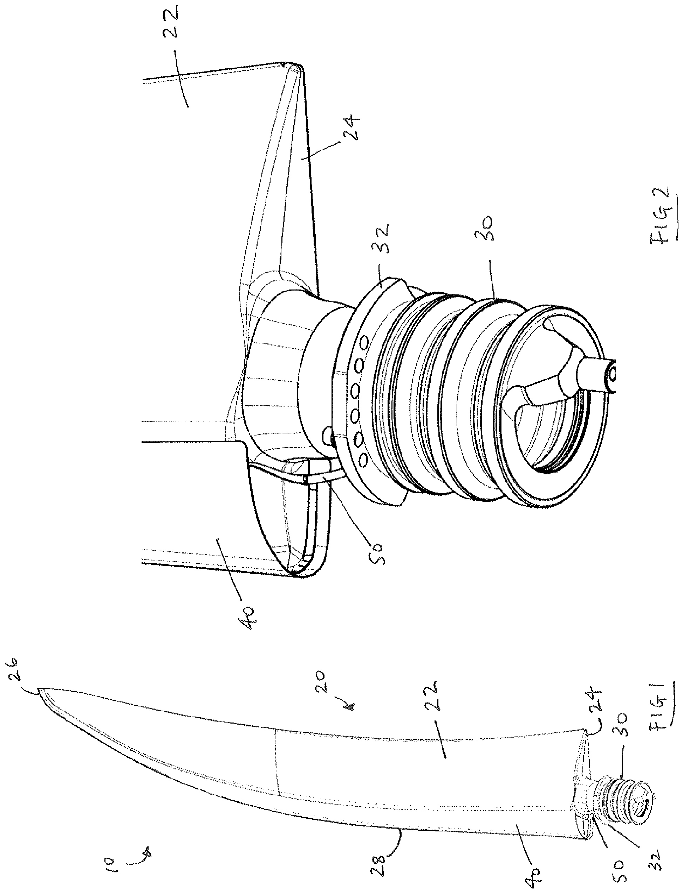

Figure 1 shows a propeller blade assembly 10 that may be mounted to a rotor hub (not shown) with further propeller blade assemblies to form a turboprop engine for an aircraft.

The propeller blade assembly 10 includes a propeller blade 20 having an airfoil 22 and a root 30 extending from the airfoil 22 for attaching the blade 20 to a hub (not shown) as described above. The airfoil 22 is of a composite structure, as is known in the art.

The blade root 30 has a circular profile for insertion into a corresponding socket in a hub. The blade root 30 mounts the propeller blade 20 to the rotor hub such that the blade 20 is retained in the hub under rotation. The airfoil 22 may be mounted for rotation about a blade axis such that the pitch of the airfoil 22 relative to the hub may be adjusted by means of a pitch change actuator engaging an actuating pin of the blade root 30. The blade root 30 is at least partially metallic, such that it can form an electrical conductor for grounding the airfoil 22 to the hub, for example the blade root 30 may be made from steel.

The airfoil 22 includes a base 24 at an end adjacent the root 30 and a tip 26 at an opposed end, distal to the base 24. The base 24 and tip 26 define a span of the airfoil 22 therebetween. The airfoil 22 further includes a leading edge 28 extending along the span of the airfoil 22 from the root 30 to the tip 26.

The propeller assembly 10 further includes a sheath 40 mounted to the leading edge 28 of the airfoil 22. In this embodiment the sheath 40 is attached to the airfoil 22 by adhesive bonding, for example using a structural adhesive such as epoxy adhesive. In alternative embodiments, the sheath 40 may be attached to the airfoil 22 during curing of the airfoil 22. The sheath 40 is made from an electrically conductive material such as a metallic material, conductive polymer or composite material such that the sheath 40 can conduct lightning or static charge from the tip 26 or any other point along the span of the airfoil 22 to the base 24. The sheath 40 may be made from stainless steel, aluminium, nickel, titanium or an alloy containing one or more of these metals. The electrically conductive sheath also may be made from an electrically conductive polymer or composite material. The electrically conductive sheath also may be made from a combination of any of the materials mentioned above. The sheath 40 may be formed from multiple parts or may be unitary, formed from a single piece of metal, for example.

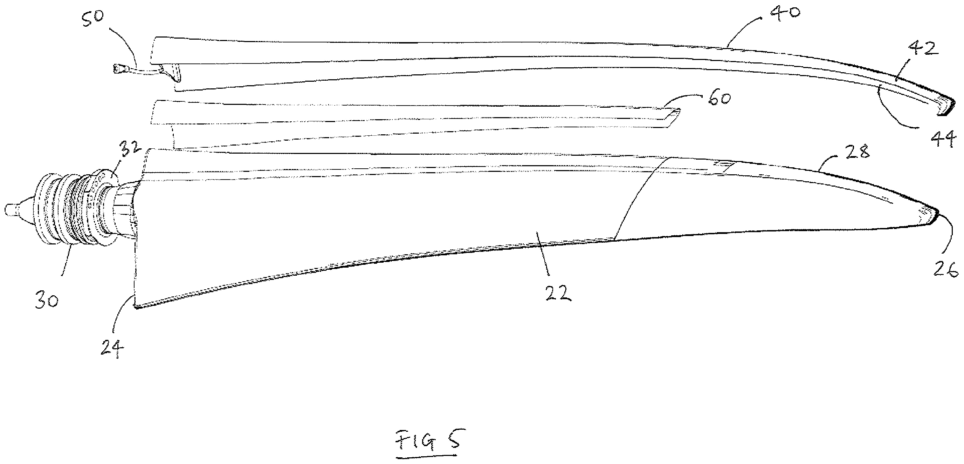

As shown in Figure 5, the sheath 40 has a convex outer surface 42 and a concave inner surface 44 and a length. The inner surface 44 of the sheath 40 is attached to the leading edge 28 of the airfoil 22. The curvature of the outer and inner surfaces 42, 44 corresponds substantially to the curvature of the leading edge 28 of the airfoil. The length of the sheath 40 is substantially equal to the length of the airfoil 22 such that, when attached to the airfoil, the sheath 40 extends from the base 24 to and over the tip 26 of the airfoil 22, i.e. along substantially the entire span of the airfoil 22 and over the entire tip 26 to provide optimum protection against erosion and lightning strikes. The width of the sheath 40 varies along the span of the airfoil 22, in particular the width of the sheath 40 is narrower at the tip 26. The sheath 40 has a first width in a region adjacent the base 24 of the airfoil, and a second width in a region adjacent the tip 26 of the airfoil 22. In the embodiment, the first width is about 25% of the width of the airfoil 22 and the second width is about 20% of the width of the airfoil 22. However it will be appreciated that other widths may be used or that the sheath 40 may have a substantially uniform width along its entire length.

The propeller assembly 10 further includes an electrically conductive element 50, in this embodiment a metallic braid 50, connected to the inner surface 44 of the sheath 40 at one end and to the root 30 or hub at the other end. The braid 50 acts as an electrically conductive element between the sheath 40 and the root 30 such that electrical discharge such as lightning or static charge will be grounded to the root 30 via the braid 50. Although the described embodiment includes a metallic braid 50 it will be appreciated that other conductor elements such as wires or connectors could be used to ground the sheath 40 to the root 30. In the described embodiment the metallic braid 50 is attached to the sheath 40 by welding, however other attachment means such as bonding or fasteners may also be used. It is attached to the root by means of a connector connected to a collar 32 formed on or mounted to the root 30 by means of a fastener, however other attachment means such as welding, crimping or adhesive, e.g. silver filled adhesive, could also be used. Furthermore it will be appreciated that the braid 50 or electrically conductive element could be connected directly to the hub rather than the blade root 30 for grounding the sheath 40 thereto.

The assembly 10 also includes one or more heaters 60 mounted to an inner surface 44 of the electrically conductive sheath 40, between the electrically conductive sheath 40 and the airfoil 22 outer surface 42. The heaters 60 comprise a mat or pad having heating elements or resistance wires therein to provide heat to the sheath 40 and leading edge 28 of the airfoil 22. Current from a current source is supplied to the heating element 60 via wires 62. As shown in Figure 5, the heating element 60 extends along only a portion of the sheath 40. In the embodiment shown the heating element 60 extends over approximately 50% of the area of the sheath 40 in a region adjacent the base 24 of the airfoil 22, although this is not limiting and the area may vary depending on the blade. It is thought that in the region of the airfoil 22 furthest from the base 24, centrifugal load is sufficient to shed the accreted ice and therefore requiring less or no heating in this region.

The heaters 60 as described above may heat an interface between accreted ice and the sheath 40 to debond the ice and shed it by centrifugal load or alternatively the heaters 60 may prevent ice from forming on the propeller blade 20 at all. The electrically conductive sheath 40 may cover the heating element 60 to protect it from erosion and foreign object damage thereby increasing the reliability of the heater 60.

Furthermore, the assembly comprises an airfoil 22, a thermally and/or electrically insulating layer formed, for example, from cellular materials as polymer foams, neoprene positioned on the airfoil surface, a heater 60 in the form of a conductive layer is positioned on the insulating layer, a further electrically insulating layer formed, for example, from impregnated glass fibre or non-conductive polymer positioned on the heater 60 and an electrically conductive sheath 40 positioned on the further insulating layer.

The outer surface 42 of the sheath 40 is flush with an outer surface of the airfoil 22 to provide a smooth and continuous surface of the blade assembly 10 so that the sheath 40 has minimal impact on the aerodynamic properties of the propeller blade assembly 10. The smooth surface may be achieved by reducing the thickness of the sheath 40 along its side edges and/or providing a recess in the airfoil 22 surface for receiving the sheath 40.

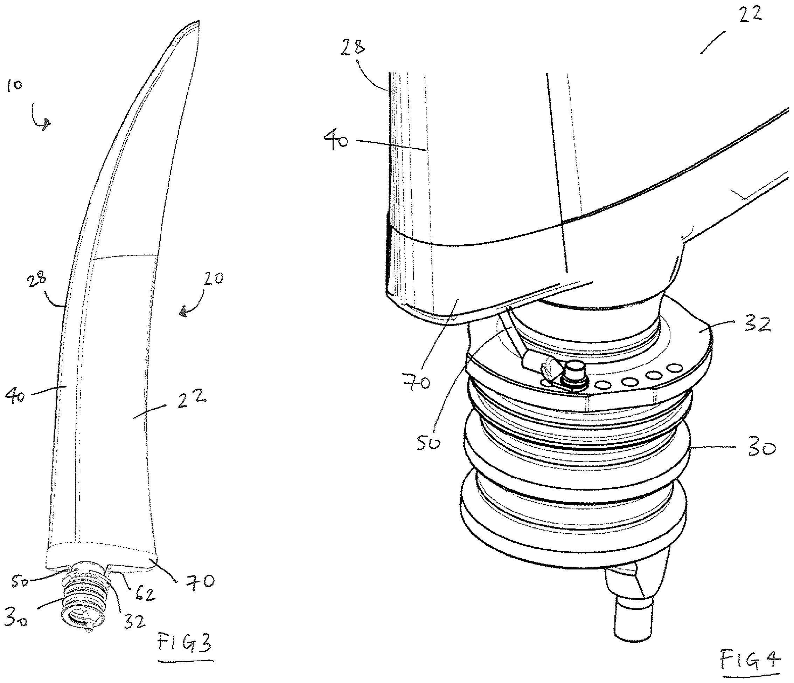

As shown in Figures 3 and 4, the propeller assembly 10 further includes a cover 70 mounted to the base 24 of the airfoil 22 to protect the metallic braid 50 and heater wires 62 and improve the aerodynamics and finish of the blade assembly 10. The cover 70 may further protect any wires 62 of the heater 60 from erosion or other damage. In this embodiment, the cover 70 is a moulded thermoplastic part; however the cover 70 may alternatively be made from composite reinforced plastics or other non-conductive materials. It may be made in two parts joined together to facilitate its assembly to the airfoil 22.

The outer surface 42 of the sheath 40 may have ice phobic surface properties to prevent or reduce freezing of water condensing on the surface of the sheath 40 for a lower adhesion strength between the sheath 40 and any ice that does form thereon. The surface texture of the sheath 40 may provide the requisite properties or a coating may be provided thereon. The outer surface 42 may also include an anti-erosion top coat. Due to the electrically conductive sheath 40 such a coating may not require conductive properties and therefore standard coatings may be used.

The sheath 40 may be mounted to the airfoil 22 with the heating elements 60. The heating elements 60 may be attached to the sheath 40 prior to assembly to the airfoil 22 such that the sheath 40 and heaters 60 form a sub assembly. Alternatively the sheath 40 and heaters 60 may be mounted to the airfoil leading edge 28 as separate parts, either at the same time or in sequence. For example, the heaters 60 may be first attached to a region of the leading edge 28 and then sheath 40 subsequently attached to the leading edge 28 over the top of the heaters 60, attachment may be by bonding, for example.

The disclosure provides a simpler manufacturing process for a propeller blade 20 that does not require an aluminium grid or glass fibre to be added. Furthermore, in case of propeller damage in service, repair of the propeller would be simpler since refurbishment of an aluminium grid and glass fibre layer will not be required.

## Claims

1. A propeller blade assembly (10) comprising:
an airfoil (22) having a base (24), a tip (26) and a leading edge (28);
a root (30) extending from the base (24) of the airfoil (22) for attaching the airfoil (22) to a hub;
an electrically conductive sheath (40) for electrically grounding the airfoil (22), the electrically conductive sheath (40) being attached to the leading edge (28) of the airfoil (22) and extending from the base (24) to the tip (26) of the airfoil (22);
an electrically conductive element (50) for electrically connecting the electrically conductive sheath (40) to the root (30) or hub; and
one or more heaters (60) arranged on an inside surface (44) of the electrically conductive sheath (40) between the electrically conductive sheath (40) and the airfoil (22); **characterised in that**:
the one or more heaters (60) comprise a mat or pad incorporating heating elements or wires to provide heat to the sheath (40) and the leading edge (28) of the airfoil (22).

2. The assembly of claim 1, wherein the electrically conductive sheath (40) extends over the whole of the airfoil tip (26).

3. The assembly of claim 1 or 2, wherein the outer surface (42) of the sheath (40) is flush with an external surface of the airfoil (22).

4. The assembly of any preceding claim, wherein the heaters (60) extend over a portion of the length of the leading edge (28) adjacent the base (26) of the airfoil (22), for example 80% or less of the length of the leading edge (28) from the base (26).

5. The assembly of any preceding claim, further comprising an electrically insulating layer between the heater (60) and the sheath (40).

6. An electrically conductive sheath (40) for electrically grounding a propeller blade (20), the electrically conductive sheath (40) having a convex outer surface (42), and a concave inner surface (44) for mounting to a leading edge (28) of an airfoil (22), the electrically conductive sheath (40) further comprising:
one or more heaters (60) arranged on the inner surface (44) and, optionally, an electrically conductive element (50) attached to the inner surface (44) for electrically connecting the electrically conductive sheath (40) to a ground;
**characterised in that**:
the one or more heaters (60) comprise a mat or pad incorporating heating elements or wires therein.

7. The assembly or sheath of any preceding claim, wherein the electrically conductive sheath (40) is made from stainless steel, aluminium, nickel, titanium or an alloy containing one or more of the above or electrically conductive polymer or composite material or a combination of any of the above.

8. The assembly or sheath of any preceding claim, wherein the electrically conductive sheath (40) comprises an ice-phobic surface on its outer surface (42) and/or an anti-erosion top coat.

9. The assembly or sheath of any preceding claim, wherein the electrically conductive sheath (40) is formed from multiple parts or from a single piece of material.

10. The assembly or sheath of any preceding claim, wherein the conductive element (50) is attached to the electrically conductive sheath (40) and/or root (30) by welding or adhesive bonding e.g. silver filled adhesive or is attached to the electrically conductive sheath (40) and/or root (30) by a fastener.

11. The assembly of any of claims 1 to 5 and 7 to 10, further comprising a cover (70) that extends over a portion of the root (30) and a portion of the base (26) of the airfoil (22) to protect a portion of the electrically conductive sheath (40) and electrically conductive element (50).

12. A propeller for an aircraft, comprising a hub and a plurality of propeller blade assemblies (10) as set forth in any of claims 1 to 5 and 7 to 11, the root (30) of each propeller blade assembly (10) attached to the hub for rotation with the hub, the propeller blade assemblies (10) mounted for rotation about a blade axis such that the pitch of the airfoil (22) relative to the hub can be adjusted

13. A method for assembling a propeller blade assembly as set forth in any of claims 1 to 5 and 7 to 11 comprising:
attaching the electrically conductive element (50) to the electrically conductive sheath (40);
attaching the electrically conductive sheath (40) to the leading edge (28) of the airfoil (22); and
attaching the electrically conductive element (50) to the root (30) or hub for electrically connecting the electrically conductive sheath (40) to the root (30) or hub; and
attaching the one or more heaters (60) to the leading edge (28) of the airfoil (22) prior to or at the same time as attaching the electrically conductive sheath (40) or attaching the one or more heaters (60) to the electrically conductive sheath (40) and attaching the electrically conductive sheath (40) and the heaters (60) to the airfoil leading edge (28) together such that the heaters (60) are positioned between the electrically conductive sheath (40) and the airfoil (22), wherein the one or more heaters (60) comprise a mat or pad incorporating heating elements or wires to provide heat to the sheath (40) and the leading edge (28) of the airfoil (22).

## Patentansprüche

1. Propellerblattanordnung (10), die Folgendes umfasst:
ein Schaufelprofil (22), das eine Basis (24), eine Spitze (26) und eine Vorderkante (28) aufweist;
einen Fuß (30), der sich von der Basis (24) des Schaufelprofils (22) erstreckt, um das Schaufelprofil (22) an einer Nabe zu befestigen;
eine elektrisch leitfähige Hülle (40), um das Schaufelprofil (22) elektrisch zu erden, wobei die elektrisch leitfähige Hülle (40) an der Vorderkante (28) des Schaufelprofils (22) angebracht ist und sich von der Basis (24) zu der Spitze (26) des Schaufelprofils (22) erstreckt;
ein elektrisch leitfähiges Element (50), um die elektrisch leitfähige Hülle (40) mit dem Fuß (30) oder der Nabe elektrisch zu verbinden; und
eine oder mehrere Heizvorrichtungen (60), die an einer Innenfläche (44) der elektrisch leitfähigen Hülle (40) zwischen der elektrisch leitfähigen Hülle (40) und dem Schaufelprofil (22) angeordnet sind, **dadurch gekennzeichnet, dass**:
die eine oder die mehreren Heizvorrichtungen (60) eine Matte oder eine Unterlage umfassen, die die Heizelemente oder Drähte einbindet, um der Hülle (40) und der Vorderkante (28) des Schaufelprofils (22) Wärme bereitzustellen.

2. Anordnung nach Anspruch 1, wobei sich die elektrisch leitfähige Hülle (40) über die Gesamtheit der Schaufelprofilspitze (26) erstreckt.

3. Anordnung nach Anspruch 1 oder 2, wobei die Außenfläche (42) der Hülle (40) bündig mit einer externen Fläche des Schaufelprofils (22) ist.

4. Anordnung nach einem der vorhergehenden Ansprüche, wobei sich die Heizvorrichtungen (60) über einen Abschnitt der Länge der Vorderkante (28) benachbart zu der Basis (26) des Schaufelprofils (22) erstrecken, zum Beispiel 80 % oder weniger der Länge der Vorderkante (28) von der Basis (26).

5. Anordnung nach einem der vorhergehenden Ansprüche, die ferner eine elektrische Isolationsschicht zwischen der Heizvorrichtung (60) und der Hülle (40) umfasst.

6. Elektrisch leitfähige Hülle (40) zum elektrischen Erden eines Propellerblatts (20), wobei die elektrisch leitfähige Hülle (40) eine konvexe Außenfläche (42) und eine konkave Innenfläche (44) zum Montieren an einer Vorderkante (28) eines Schaufelprofils (22) aufweist, wobei die elektrisch leitfähige Hülle (40) ferner Folgendes umfasst:
eine oder mehrere Heizvorrichtungen (60), die an der Innenfläche (44) angeordnet sind und, wahlweise, ein elektrisch leitfähiges Element (50), das an der Innenfläche (44) angebracht ist, um die elektrisch leitfähige Hülle (40) mit einer Erdung zu verbinden;
**dadurch gekennzeichnet, dass**:
die eine oder die mehreren Heizvorrichtungen (60) eine Matte oder eine Unterlage umfassen, die Wärmeelemente oder Drähte darin einbindet.

7. Anordnung oder Hülle nach einem der vorhergehenden Ansprüche, wobei die elektrisch leitfähige Hülle (40) aus einem rostfreien Stahl, Aluminium, Nickel, Titan oder einer Legierung hergestellt ist, die eines oder mehrere der Vorstehenden oder elektrisch leitfähige Polymere oder Verbundmaterialien oder eine Kombination von beliebigen der Vorstehenden enthält.

8. Anordnung oder Hülle nach einem der vorhergehenden Ansprüche, wobei die elektrisch leitfähige Hülle (40) eine eisabstoßende Fläche auf ihrer Außenfläche (42) und/oder eine erosionsbeständige obere Schicht umfasst.

9. Anordnung oder Hülle nach einem der vorhergehenden Ansprüche, wobei die elektrisch leitfähige Hülle (40) aus mehreren Teilen oder aus einem einzelnen Stück Material gebildet ist.

10. Anordnung oder Hülle nach einem der vorhergehenden Ansprüche, wobei das leitfähige Element (50) durch Schweißen oder Haftverbinden, z. B. von silbergefülltem Klebstoff, an der elektrisch leitfähigen Hülle (40) und/oder dem Fuß (30) angebracht ist oder über ein Befestigungselement an der elektrisch leitfähigen Hülle (40) und/oder dem Fuß (30) angebracht ist.

11. Anordnung nach einem der Ansprüche 1 bis 5 und 7 bis 10, die ferner eine Abdeckung (70) umfasst, die sich über einen Abschnitt des Fußes (30) und einen Abschnitt der Basis (26) des Schaufelprofils (22) erstreckt, um einen Abschnitt der elektrisch leitfähigen Hülle (40) und des elektrisch leitfähigen Elements (50) zu schützen.

12. Propeller für ein Luftfahrzeug, der eine Nabe und eine Vielzahl von Propellerblattanordnungen (10) nach einem der Ansprüche 1 bis 5 und 7 bis 11 umfasst, wobei der Fuß (30) von jeder Propellerblattanordnung (10) zur Drehung mit der Nabe an der Nabe angeordnet ist, wobei die Propellerblattanordnungen (10) zur Drehung um eine Blattachse montiert sind, sodass die Neigung des Schaufelprofils (22) relativ zu der Nabe eingestellt werden kann.

13. Verfahren zum Anordnen einer Propellerblattanordnung nach einem der Ansprüche 1 bis 5 und 7 bis 11, das Folgendes umfasst:
Anbringen des elektrisch leitfähigen Elements (50) an der elektrisch leitfähigen Hülle (40);
Anbringen der elektrisch leitfähigen Hülle (40) an der Vorderkante (28) des Schaufelprofils (22); und
Anbringen des elektrisch leitfähigen Elements (50) an dem Fuß (30) oder der Nabe zum elektrischen Verbinden der elektrisch leitfähigen Hülle (40) mit dem Fuß (30) oder der Nabe; und
Anbringen der einen oder der mehreren Heizvorrichtungen (60) an der Vorderkante (28) des Schaufelprofils (22) vor oder gleichzeitig mit dem Anbringen der elektrisch leitfähigen Hülle (40) oder dem Anbringen der einen oder der mehreren Heizvorrichtungen (60) an der elektrisch leitfähigen Hülle (40) und Anbringen der elektrisch leitfähigen Hülle (40) und der Heizvorrichtungen (60) zusammen an der Schaufelprofilvorderkante (28), sodass die Heizvorrichtungen (60) zwischen der elektrisch leitfähigen Hülle (40) und dem Schaufelprofil (22) positioniert sind, wobei die eine oder die mehreren Heizvorrichtungen (60) eine Matte oder eine Unterlage umfassen, die die Heizelemente oder Drähte einbindet, um der Hülle (40) und der Vorderkante (28) des Schaufelprofils (22) Wärme bereitzustellen.

## Revendications

1. Ensemble de pales d'hélice (10), comprenant :
une surface portante (22) ayant une base (24), une extrémité (26) et un bord d'attaque (28) ;
une racine (30) s'étendant depuis la base (24) de la surface portante (22) pour fixer la surface portante (22) à un moyeu ;
une gaine électriquement conductrice (40) pour mettre électriquement à la terre la surface portante (22), la gaine électriquement conductrice (40) étant fixée au bord d'attaque (28) de la surface portante (22) et s'étendant de la base (24) à l'extrémité (26) de la surface portante (22) ;
un élément électriquement conducteur (50) pour raccorder électriquement la gaine électriquement conductrice (40) à la racine (30) ou au moyeu ; et
un ou plusieurs éléments chauffants (60) disposés sur une surface interne (44) de la gaine électriquement conductrice (40) entre la gaine électriquement conductrice (40) et la surface portante (22) ;
**caractérisé en ce que** :
les un ou plusieurs éléments chauffants (60) comprennent une nappe ou un coussinet incorporant des éléments chauffants ou des câbles pour fournir de la chaleur à la gaine (40) et au bord d'attaque (28) de la surface portante (22).

2. Ensemble selon la revendication 1, dans lequel la gaine électriquement conductrice (40) s'étend sur la totalité de l'extrémité de la surface portante (26).

3. Ensemble selon la revendication 1 ou 2, dans lequel la surface extérieure (42) de la gaine (40) est alignée avec une surface externe de la surface portante (22).

4. Ensemble selon une quelconque revendication précédente, dans lequel les éléments chauffants (60) s'étendent sur une partie de la longueur du bord d'attaque (28) adjacente à la base (26) de la surface portante (22), par exemple 80 % ou moins de longueur du bord d'attaque (28) à partir de la base (26) .

5. Ensemble selon une quelconque revendication précédente, comprenant en outre une couche électriquement isolante entre l'élément chauffant (60) et la gaine (40).

6. Gaine électriquement conductrice (40) pour mettre électriquement à la terre une pale d'hélice (20), la gaine électriquement conductrice (40) ayant une surface externe convexe (42) et une surface interne concave (44) pour être montée sur un bord d'attaque (28) d'une surface portante (22), la gaine électriquement conductrice (40) comprenant en outre :
un ou plusieurs éléments chauffants (60) disposés sur la surface interne (44) et, éventuellement, un élément électriquement conducteur (50) fixé à la surface interne (44) pour raccorder électriquement la gaine électriquement conductrice (40) à la terre ;
**caractérisé en ce que** :
les un ou plusieurs éléments chauffants (60) comprennent une nappe ou un coussinet incorporant des éléments chauffants ou des câbles.

7. Ensemble ou gaine selon une quelconque revendication précédente, dans lequel la gaine électriquement conductrice (40) est en acier inoxydable, en aluminium, en nickel, en titane ou en un alliage contenant un ou plusieurs des éléments ci-dessus ou un polymère électriquement conducteur ou un matériau composite ou une combinaison de l'un quelconque des éléments ci-dessus.

8. Ensemble ou gaine selon une quelconque revendication précédente, dans lequel la gaine électriquement conductrice (40) comprend une surface glaciophobe sur sa surface externe (42) et/ou une couche de finition anti-érosion.

9. Ensemble ou gaine selon une quelconque revendication précédente, dans lequel la gaine électriquement conductrice (40) est formée de plusieurs parties ou d'une seule pièce de matériau.

10. Ensemble ou gaine selon une quelconque revendication précédente, dans lequel l'élément conducteur (50) est fixé à la gaine électriquement conductrice (40) et/ou à la racine (30) par soudage ou liaison adhésive, par exemple par un adhésif chargé d'argent, ou est fixé à la gaine électriquement conductrice (40) et/ou la racine (30) par une attache.

11. Ensemble selon l'une quelconque des revendications 1 à 5 et 7 à 10, comprenant en outre un couvercle (70) qui s'étend sur une partie de la racine (30) et une partie de la base (26) de la surface portante (22) pour protéger une partie de la gaine électriquement conductrice (40) et de l'élément électriquement conducteur (50).

12. Hélice pour aéronef, comprenant un moyeu et une pluralité d'ensembles de pales d'hélice (10) selon l'une quelconque des revendications 1 à 5 et 7 à 11, la racine (30) de chaque ensemble de pales d'hélice (10) étant fixé au moyeu pour tourner avec le moyeu, les ensembles de pales d'hélice (10) étant montés en rotation autour d'un axe de pale de sorte que le pas de la surface portante (22) par rapport au moyeu peut être ajusté.

13. Procédé d'assemblage d'un ensemble de pales d'hélice selon l'une quelconque des revendications 1 à 5 et 7 à 11, comprenant :
la fixation de l'élément électriquement conducteur (50) à la gaine électriquement conductrice (40) ;
la fixation de la gaine électriquement conductrice (40) au bord d'attaque (28) de la surface portante (22) ; et
la fixation de l'élément électriquement conducteur (50) à la racine (30) ou au moyeu pour raccorder électriquement la gaine électriquement conductrice (40) à la racine (30) ou au moyeu ; et
la fixation d'un ou de plusieurs éléments chauffants (60) au bord d'attaque (28) de la surface portante (22) avant ou en même temps que la fixation de la gaine électriquement conductrice (40) ou la fixation d'un ou de plusieurs éléments chauffants (60) à la gaine électriquement conductrice (40) et la fixation de la gaine électriquement conductrice (40) et des éléments chauffants (60) au bord d'attaque de la surface portante (28) ensemble de sorte que les éléments chauffants (60) sont positionnés entre la gaine électriquement conductrice (40) et la surface portante (22) dans lequel les un ou plusieurs éléments chauffants (60) comprennent une nappe ou un coussinet incorporant des éléments chauffants ou des câbles pour fournir de la chaleur à la gaine (40) et au bord d'attaque (28) de la surface portante (22).
